# EUROPÄISCHE PATENTANMELDUNG

(11) **EP 3 081 345 A2**
(43) Veröffentlichungstag der Anmeldung: **19.10.2016**
(21) Anmeldenummer: 16164880.3
(22) Anmeldetag: 12.04.2016
(51) Int. Cl.: B25J 9/16

(54) **ADAPTIVES AUTOMATISIERUNGSSYSTEM ZUR BAUTEILPRÜFUNG**

(30) Priorität: 17.04.2015 DE 102015206981
(71) Anmelder: KUKA Systems GmbH, 86165 Augsburg (DE)
(72) Erfinder: HONSBERG, Otmar, 82256 Fürstenfeldbruck (DE); KIRARSLAN, Aliriza, 82380 Peißenberg (DE); PROSKE, Jürgen, 86356 Neusäß (DE); PRUES, Sebastian, 86153 Augsburg (DE); MÜLLER, Veit, 86150 Augsburg (DE); KISER, Florian, 82281 Unterschweinbach (DE); KRAUS, Erich, 86465 Welden (DE)
(74) Vertreter: Mader, Joachim

(57) **Zusammenfassung**

Die vorliegende Erfindung betrifft ein Verfahren zum Überprüfen eines Bauteils mit einem mehrachsigen Manipulator. Die Achsen des Manipulators sind dabei mit Sensoren zur Erfassung von Drehmomenten und Kräften versehen. Ferner umfasst der Manipulator ein Messsystem zum Überprüfen des Bauteils. Das erfindungsgemäße Verfahren umfasst dabei unter anderem ein unmittelbares Führen des Manipulators von Hand, wobei der Manipulator in einem Betriebsmodus zur aktiven Nachgiebigkeitsregelung betrieben wird, und ein Bestimmen von Bahnpunkten der durch das unmittelbare Führen des Manipulators geführten Bahn.

## Beschreibung

### 1. Technischer Bereich

Die vorliegende Erfindung betrifft ein Verfahren zum Überprüfen eines Bauteils mit einem mehrachsigen Manipulator, als auch ein entsprechendes Robotersystem.

### 2. Technischer Hintergrund

Um ein Bauteil (oder ein Werkstück) einer Qualitätskontrolle zu unterziehen, wird dieses Bauteil üblicherweise mit einem Handmesssystem, wie etwa einem handgeführten Laserscanner, vermessen. Diesen Vorgang muss ein Mitarbeiter üblicherweise für jedes zu vermessende Bauteil separat durchführen.

Obwohl solch eine Qualitätskontrolle mit einem Handmesssystem sehr adaptiv ist, ist diese Vorgehensweise mit Nachteilen verbunden. Zum einen ist das separate Führen eines Handmesssystems für jedes Bauteil aufwendig, und weiterhin wird ein Mitarbeiter benötigt, welcher auf diese Art die Qualitätskontrolle durchführt. Des Weiteren ist, da ein Mitarbeiter die Qualitätskontrolle per Hand durchführt, die Qualitätskontrolle folglich menschlichen Fehlereinflüssen ausgesetzt. Da die handgeführten Messgeräte teilweise auch sehr unergonomisch sein können (beispielsweise aufgrund ihres hohen Gewichts oder aufgrund eines unvorteilhaften Haltungswinkels, etc.), kann das Durchführen einer Qualitätskontrolle für einen Mitarbeiter entsprechend umständlich und aufwendig sein.

Es ist somit eine Aufgabe der vorliegenden Erfindung, eine Methode bereitzustellen, welche ein einfaches und möglichst fehlerfreies Messen bzw. Überprüfen eines Bauteils erlaubt. Es ist eine weitere Aufgabe der vorliegenden Erfindung, ein System bereitzustellen, welches eine Qualitätskontrolle eines Bauteils erlaubt, wobei der Arbeitsaufwand eines Mitarbeiters reduziert wird. Eine weitere Aufgabe der vorliegenden Erfindung ist es, ein System zur Durchführung einer Qualitätskontrolle bereitzustellen, welches genaue Messaufnahmen des Bauteils liefert.

Diese und weitere Aufgaben, welche beim Lesen der folgenden Beschreibung ersichtlich werden, werden durch den Gegenstand des Haupt- und Nebenanspruchs gelöst.

### 3. Inhalt der Erfindung

Die vorliegende Erfindung betrifft ein Verfahren zum Überprüfen eines Bauteils mit einem mehrachsigen Manipulator. Das Überprüfen eines Bauteils, oder auch Prüfen eines Bauteils, kann dabei verschiedene Aspekte umfassen, welche beispielsweise eine Qualitätskontrolle eines Bauteils mit sich bringt. Somit kann es sich bei der Überprüfung eines Bauteils beispielsweise um ein Vermessen des Bauteils handeln, um die Dimension des Bauteils beispielsweise mit bereitgestellten CAD-Daten zu vergleichen.

Gemäß der vorliegenden Erfindung sind die Achsen des mehrachsigen Manipulators mit Sensoren zur Erfassung von Drehmomenten und Kräften versehen. Als Sensoren kommen bevorzugt Kraft-Momenten-Sensoren zum Einsatz, und zwar insbesondere Sensoren, die auf Dehnungsmessstreifen (DMS) basieren, die an den Achsen - oder zumindest an einer Achse - des Manipulators angeordnet sind. Dehnungsmessstreifen erlauben eine besonders präzise Erfassung der wirkenden Kräfte. Weiter bevorzugt sind alle Achsen des Manipulators mit derartigen Kraft-Momenten-Sensoren ausgestattet. Somit ist eine besonders wirkungsvolle Steuerung und Überwachung des Manipulators möglich.

Vorzugsweise kann der Manipulator in mindestens einem seiner Freiheitsgrade mittels Nachgiebigkeitsregelung betrieben werden, wobei diese Nachgiebigkeitsregelung insbesondere mittels einer Impedanzregelung, einer Admittanzregelung, einer Positionsregelung oder einer Drehmomentenregelung erfolgen kann.

Der Manipulator umfasst ein Messsystem zum Überprüfen des Bauteils. Vorzugsweise ist das Messsystem trennbar an einem Flansch des Manipulators angebracht, und bildet vorzugsweise das letzte Element einer kinematischen Kette des Manipulators. Das Messsystem kann dabei ein oder mehrere Messvorrichtungen umfassen, welche für ein Überprüfen eines Bauteils geeignet sind. Besonders bevorzugt umfasst das Messsystem einen Laserscanner, welches beispielsweise ein Bauteil vermessen kann.

Das erfindungsgemäße Verfahren zum Überprüfen des Bauteils weist dabei ein unmittelbares Führen des Manipulators von Hand auf, wobei der Manipulator in einem Betriebsmodus zur aktiven Nachgiebigkeitsregelung betrieben wird. Ein Bediener, wie beispielsweise ein Mitarbeiter, steuert dabei den Manipulator, indem er den Manipulator unmittelbar per Hand führt. Er fasst also vorzugsweise den Manipulator direkt an, und schiebt oder zieht den Manipulator in eine gewünschte Richtung. Vorzugsweise kann der Manipulator auf diese Weise beliebig bewegt werden, er ist also vollständig weichgeschaltet. Besonders bevorzugt wird der handgeführte Manipulator direkt am Messsystem geführt, der Bediener konzentriert sich also auf die Bewegung des Messsystems, und der Manipulator erfasst die aufgrund der unmittelbaren Führung auftretenden Kräfte und Drehmomente und steuert seine Achsen entsprechend, sodass der Manipulator der unmittelbaren Führung durch den Bediener folgt.

Bevorzugt ist in dem Schritt, in welchem der Bediener das Messsystem per Hand führt, die "Gravitationskompensation" des Manipulators aktiviert, sodass der Bediener das Eigengewicht des Manipulators nicht zu bewegen hat, sondern den Manipulator lediglich führen muss. Dadurch wird eine sehr leichte Bewegung des Manipulators ermöglicht. Weiterhin bevorzugt ist in diesem Modus ebenso bereits das Eigengewicht des Messsystems mit eingerechnet, sodass auch dieses Gewicht vom Manipulator bereits berücksichtigt wird, sodass letztendlich eine weitere Erleichterung der Bewegung des Manipulators beim Führen von Hand erreicht wird.

Weiter umfasst das erfindungsgemäße Verfahren ein Bestimmen von Bahnpunkten der durch das unmittelbare Führen des Manipulators geführten Bahn. Vorzugsweise werden die Bahnpunkte des Messsystems während des unmittelbaren Führens des Manipulators von Hand erfasst, und weiter vorzugsweise in einer Steuerung hinterlegt. Alternativ oder zusätzlich können auch Achswinkel des Manipulators bestimmt werden. Jedenfalls werden die Bahnpunkte derart bestimmt, dass diese durch das unmittelbare Führen geführte Bahn automatisch in einem späteren Schritt durch den Manipulator basierend auf den bestimmten Bahnpunkten abgefahren werden kann.

Das erfindungsgemäße Verfahren zum Überprüfen des Bauteils umfasst ferner ein Abfahren der Bahnpunkte durch den Manipulator. Es werden also die Bahnpunkte, die zuvor für die durch das unmittelbare Führen des Manipulators geführte Bahn bestimmt wurden, in diesem Schritt durch den Manipulator abgefahren. Vorzugsweise führt der Manipulator dieselben Bewegungen durch, wie während des Schrittes des unmittelbaren Führens des Manipulators von Hand. Vorzugsweise erfolgt dieses Abfahren der Bahnpunkte durch eine automatische Ansteuerung der Antriebe des Manipulators, also ohne, dass eine aktive Steuerung durch einen Bediener erfolgt.

Gemäß dem erfindungsgemäßen Verfahren wird während des Abfahrens der Bahnpunkte durch den Manipulator das Bauteil mittels des Messsystems überprüft. Das Überprüfen des Bauteils kann dabei vorzugsweise zumindest eines des Folgenden umfassen: Ein Vermessen des Bauteils, ein Vermessen einer Abmessung des Bauteils, ein Erkennen des Bauteils, oder ein Erkennen und/oder Prüfen eines Merkmals des Bauteils. Beispielsweise kann eine Bohrung in einem Bauteil erkannt und z.B. ein Durchmesser der erkannten Bohrung vermessen werden.

Mittels des erfindungsgemäßen Verfahrens zum Überprüfen eines Bauteils ist es somit möglich, Bahnpunkte intuitiv und leicht zu bestimmen, welche Bahnpunkte später automatisch durch den Manipulator zum Überprüfen des Bauteils abgefahren werden. Ein Mitarbeiter muss also nur einmal eine Bahn vorgeben, wobei er hierbei durch unmittelbares Führen des Manipulators von Hand intuitiv diese Bahnpunkte vorgeben kann. Der Mitarbeiter muss das Handmesssystem nicht mehr selbst tragen bzw. heben, da das Handmesssystem vorzugsweise das Messsystem zum Überprüfen des Bauteils ist, welches nun von dem Manipulator gehalten wird. Das Messsystem kann somit trotz der Automatisierung adaptiv an unterschiedlichen Bauteilen geführt werden, um eine Überprüfung bzw. Qualitätskontrolle dieser Bauteile zu ermöglichen.

Da nur einmal das Messsystem bzw. der Manipulator von Hand geführt werden muss, um die Bahnpunkte zur Überprüfung des Bauteils zu bestimmen, ist das Risiko von auftretenden Flüchtigkeitsfehlern viel geringer, als wenn jedes Bauteil separat mittels eines Handmesssystems einer Qualitätskontrolle durch einen Mitarbeiter unterzogen wird. Ferner ist es möglich, systematische Messfehler aufgrund der Wiederholbarkeit der Überprüfung des Bauteils zu reduzieren.

Vorzugsweise ist eine Bewegung des Manipulators während des Schritts des unmittelbaren Führens des Manipulators von Hand eingeschränkt, sodass eine Bewegung des Messsystems nur in einer Ebene möglich ist. Wenn beispielsweise das Messsystem bzw. der Manipulator entlang einer ebenen Fläche eines Bauteils geführt werden soll, kann durch das Einschränken der Bewegung des Manipulators ein vorgegebener Abstand zwischen Messgerät und Bauteil leicht eingehalten werden.

Vorzugsweise sind alle Achsen des Manipulators weichgeschaltet, sodass der Manipulator bequem von Hand geführt werden kann, sodass die abzufahrenden Bahnpunkte leicht und intuitiv eingelernt werden können.

Ferner umfasst die vorliegende Erfindung ein Robotersystem, welches einen Manipulator umfasst, dessen Achsen mit Sensoren zur Erfassung von Drehmomenten und Kräften versehen sind. Ferner umfasst der Manipulator des erfindungsgemäßen Robotersystems ein Messsystem zum Überprüfen eines Bauteils. Weiterhin weist das Robotersystem eine Steuereinrichtung auf, welche eingerichtet ist, ein erfindungsgemäßes Verfahren zum Überprüfen eines Bauteils durchzuführen. Vorzugsweise umfasst das Messsystem zum Überprüfen des Bauteils dabei einen Laserscanner.

### 4. Ausführungsbeispiele

Im Folgenden wird die Erfindung unter Bezugnahme auf die beigefügten Figuren genauer erläutert. Dabei zeigt:

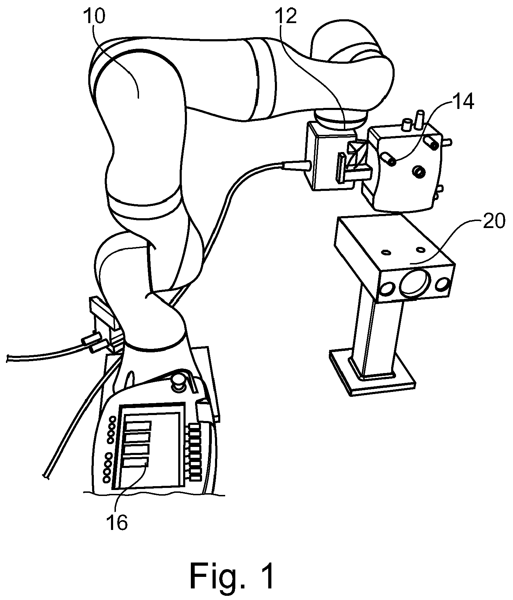

- Fig. 1: einen mehrachsigen Manipulator mit einem Messsystem zum Überprüfen eines Bauteils.

Die Fig. 1 zeigt einen mehrachsigen Manipulator 10 oder Gelenkarmroboter 10, dessen Achsen mit Sensoren zur Erfassung von Drehmomenten und Kräften versehen sind. Bei dem beispielhaft dargestellten Manipulator 10 handelt es sich um einen Leichtbauroboter des Typs KUKA LBR iiwa, welcher in der dargestellten Ausführungsform ortsfest installiert ist. An einem Handflansch 12 des Manipulators 10 ist ein Laserscanner 14 montiert, mit welchem ein Werkstück oder Bauteil 20 vermessen werden kann. Ferner ist in der Fig. 1 ein mobiles Endgerät 16 dargestellt, welches ebenfalls zur Steuerung des Manipulators 10 verwendet werden kann.

An dem Messsystem, umfassend den Laserscanner 14, ist eine pneumatische Betätigung integriert, mit welcher über den Manipulator 10 ein Auslöseknopf des Laserscanners 14 (nicht gezeigt) angesteuert werden kann. Somit entfällt vorzugsweise auch eine SPS-Anbindung. Es kann also vorteilhaft ein für einen "Handbetrieb" gedachtes Messsystem verwendet werden. Dennoch kann eine De-/Aktivierung des Laserscanners 14 auch über eine Steuerung des Manipulators 10 erfolgen bzw. in diese eingebunden sein.

Zum Einlernen der abzufahrenden Bahn steht eine Roboterapplikation zur Verfügung, die über verschiedene Funktionen verfügt, die im Folgenden kurz beschrieben werden. Mittels des Eingabegeräts 16 kann der Manipulator in allen Achsen weichgeschaltet werden oder auch kartesisch in jeweils der x-, y- und z-Richtung. Durch das Weichschalten ist es möglich, den Manipulator 10 per Hand zu führen, also den Manipulator 10 direkt per Hand in eine gewünschte Richtung zu drücken. Der Manipulator 10 erkennt die auf die Achsen wirkenden Kräfte und Drehmomente und steuert seine Antriebe entsprechend, sodass er der Handführung folgt. Durch die Verwendung eines "weichen" Roboters oder Manipulators kann dieser bequem per Hand geführt werden, sodass die abzufahrende Bahn live eingelernt werden kann. Die Bahn wird aufgezeichnet und gespeichert, sodass sie zu einer beliebigen Zeit automatisch abgefahren werden kann. Ob das Messsystem bzw. der Laserscanner 14 kontinuierlich während des Einlernens eingeschaltet ist, kann der Bediener über ein Auswahlmenü in dem Eingabegerät 16 festlegen. Somit kann der Laserscanner 14 beispielsweise bei Übergängen von einem Bauteilbereich zu einem anderen deaktiviert werden, sodass Messfehler hierbei vermieden werden.

Weiterhin wird ebenso eine Aktivierung und Deaktivierung des Messsystems bzw. Laserscanners 14 von der Steuerung des Manipulators 10 detektiert bzw. aufgezeichnet und/oder gespeichert, sodass beim automatischen Abfahren das Messsystems bzw. der Laserscanner 14 ebenso aktiviert und deaktiviert wird.

Da der Laserscanner 14 einen gewissen Abstand zum Bauteil 20 haben sollte, kann das Bauteil 20 während dem unmittelbaren Führen von Hand sehr nah angefahren werden, und anschließend automatisch ein gewisser oder vorgegebener Abstand zwischen dem Laserscanner 14 und dem Bauteil 20 eingestellt werden. Die entsprechende automatische Bewegung kann beispielsweise über ein Auswahlmenü in dem Eingabegerät 16 gestartet werden. Vorzugsweise kann der Abstand zwischen Laserscanner 14 und Werkstück bzw. Bauteil 20 auch automatisch erkannt werden, und ein vorteilhafter Abstand automatisch durch den Manipulator 10 eingestellt werden.

Eine weitere Roboterapplikation dient dazu, die während dem unmittelbaren Führen des Manipulators 10 von Hand eingelernten Bahnpunkte automatisch abzufahren. Eine im Programm integrierte Kollisionsüberwachung schützt dabei vorteilhaft den Menschen als auch den Manipulator 10 sowie den Laserscanner 14 vor ernsthaften Schäden im Falle eines Zusammenstoßes.

Mittels einer weiteren Applikation können überflüssige Zwischenpunkte der eingelernten Bahn, also uninteressante Bahnpunkte, gelöscht werden. Hierzu können bestimmte Algorithmen verwendet werden, mit welcher die Bahn, welche aus den Bahnpunkten besteht, geglättet wird. Hierzu muss der Bediener die Applikation einmal ausführen und die komplette Bahn abfahren, bis diese optimal eingestellt ist. Anschließend kann der Bediener entscheiden, ob ein oder mehrere Bahnpunkte gelöscht werden oder nicht.

Im Abschluss wird durch eine Software aus den mit dem Messsystem oder Laserscanner 14 aufgenommenen Bildern bzw. Bildfolgen ein 3D-Modell des Bauteils 20 erstellt. Dieses 3D-Modell wird dann mit einem CAD-Modell des Werkstücks verglichen, um festzustellen, ob das hergestellte Bauteil 20 dem CAD-Modell entspricht. Das Bauteil wird also anhand der durch den Laserscanner 14 aufgenommenen Messdaten und einem CAD-Modell überprüft.

### Bezugszeichenliste:

- 10: Manipulator
- 12: Flansch
- 14: Laserscanner
- 16: Eingabegerät
- 20: Bauteil

## Patentansprüche

1. Verfahren zum Überprüfen eines Bauteils (20) mit einem mehrachsigen Manipulator (10), dessen Achsen mit Sensoren zur Erfassung von Drehmomenten und Kräften versehen sind, und wobei der Manipulator (10) ferner ein Messsystem zum Überprüfen des Bauteils (20) umfasst, das Verfahren aufweisend:
a) Unmittelbares Führen des Manipulators (10) von Hand, wobei der Manipulator (10) in einem Betriebsmodus zur aktiven Nachgiebigkeitsregelung betrieben wird;
b) Bestimmen von Bahnpunkten der durch das unmittelbare Führen des Manipulators (10) geführten Bahn;
c) Abfahren der Bahnpunkte durch den Manipulator (10), und
d) während Schritt c): Überprüfen des Bauteils (20) mittels des Messsystems.

2. Verfahren nach Anspruch 1, wobei das Messsystem zum Überprüfen des Bauteils (20) einen Laserscanner (14) umfasst.

3. Verfahren nach Anspruch 1 oder 2, wobei das Überprüfen des Bauteils (20) zumindest eines der folgenden umfasst:
Vermessen des Bauteils (20);
Vermessen einer Abmessung des Bauteils (20);
Erkennen des Bauteils (20), und
Erkennen und/oder Prüfen eines Merkmals des Bauteils (20).

4. Verfahren nach einem der voranstehenden Ansprüche, wobei eine Bewegung des Manipulators (10) während Schritt a) eingeschränkt ist, sodass eine Bewegung des Messsystems in nur einer Ebene möglich ist.

5. Robotersystem, umfassend einen Manipulator (10), dessen Achsen mit Sensoren zur Erfassung von Drehmomenten und Kräften versehen sind, und wobei der Manipulator (10) ferner ein Messsystem zum Überprüfen eines Bauteils (20) umfasst, und wobei das Robotersystem ferner eine Steuereinrichtung aufweist, welche eingerichtet ist ein Verfahren nach einem der Ansprüche 1 bis 4 durchzuführen.

6. Robotersystem nach Anspruch 5, wobei das Messsystem zum Überprüfen des Bauteils (20) einen Laserscanner umfasst.
